# EUROPEAN PATENT SPECIFICATION

(11) **EP 3 595 402 B1**
(45) Date of publication and mention of the grant of the patent: **26.08.2026**
(21) Application number: 17903811.2
(22) Date of filing: 01.04.2017
(51) Int. Cl.: H04W 92/20, H04W 72/02, H04W 16/32

(54) **CHANNEL SELECTION METHOD AND APPARATUS**
VERFAHREN UND VORRICHTUNG ZUR KANALAUSWAHL
PROCÉDÉ ET APPAREIL DE SÉLECTION DE CANAL

(43) Date of publication of application: 15.01.2020
(73) Proprietor: Huawei Technologies Co., Ltd., Longgang District Shenzhen, Guangdong 518129 (CN)
(72) Inventor: ZHAO, Wangsheng, Shenzhen Guangdong 518129 (CN); GUO, Hui, Shenzhen Guangdong 518129 (CN); LV, Jie, Shenzhen Guangdong 518129 (CN)
(74) Representative: Maiwald GmbH
(86) International application number: PCT/CN2017/079307
(87) International publication number: WO 2018/176471

(56) References cited:
- WO-A1-2015/134553
- CN-A- 103 378 875
- CN-A- 104 639 360
- CN-A- 106 535 199
- US-A1- 2004 160 986
- US-A1- 2007 280 155
- US-A1- 2010 177 703
- US-A1- 2014 254 471
- US-A1- 2015 085 699
- US-A1- 2016 029 384
- US-B1- 6 690 657

## Description

### TECHNICAL FIELD

Embodiments of the present invention relate to the field of communications technologies, and in particular, to a channel selection method and an apparatus.

### BACKGROUND

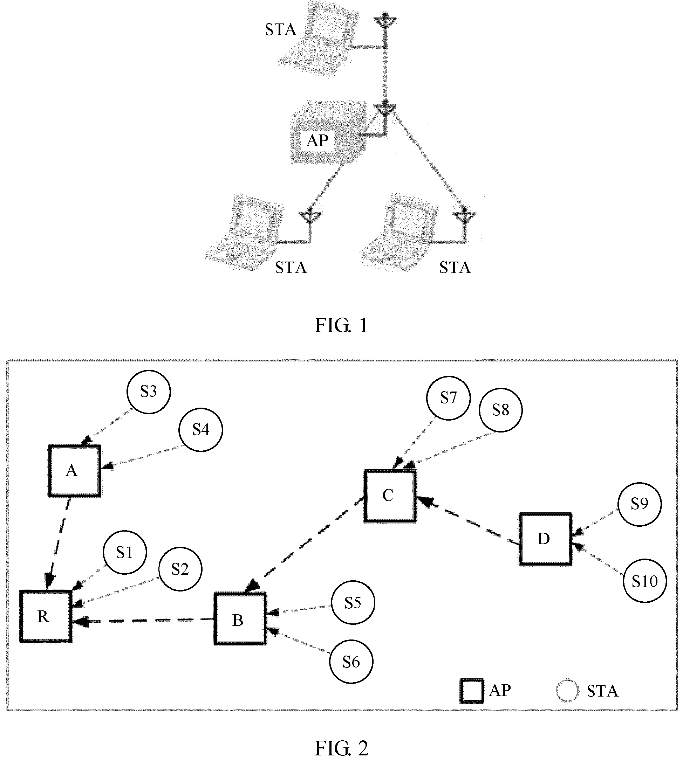

A structure of a WiFi network of a basic service set (basic service set, BSS) is shown in FIG. 1, and includes one access point (access point, AP) and one or more stations (station, STA). The one or more STAs access the WiFi network by using the AP, and may use a service provided by the AP. Currently, because a majority of WiFi networks have relatively large application ranges, a single AP cannot cover the WiFi network, and distributed coverage needs to be used. For example, a WiFi network that is covered in a distributed manner and that is shown in FIG. 2 includes a plurality of APs, a cascading relationship exists between the plurality of APs, and each AP may access one or more STAs. Because an existing AP may support connections on two or more frequency bands, and each frequency band may include a plurality of channels, channel selection is required during AP cascading in the WiFi network covered in a distributed manner.

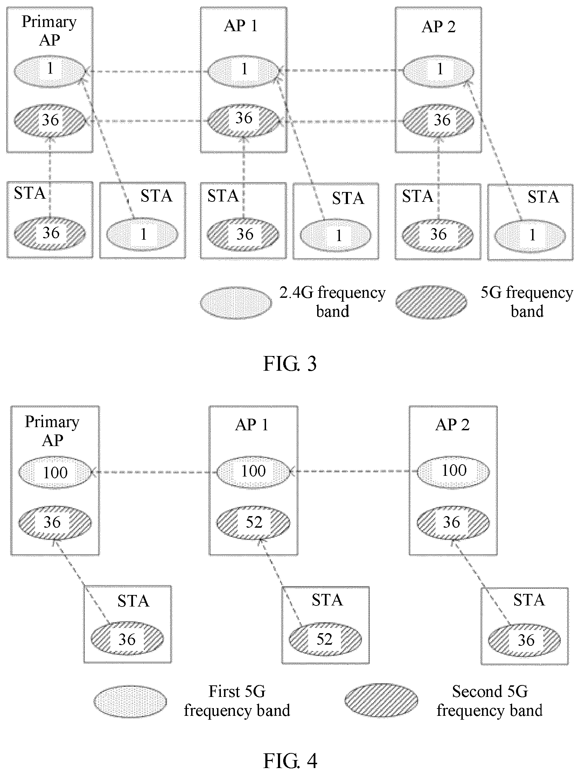

In the prior art, when an AP supports a connection on only one frequency band, the AP inevitably can perform cascading and access by using only the frequency band. If the AP simultaneously supports connections on two frequency bands, a channel is usually selected by using the following two methods. In a first method, as shown in FIG. 3, an AP simultaneously uses two frequency bands as frequency bands used by the AP to perform cascading and used by the AP to access a STA, and channels used by the AP to perform cascading and access in one frequency band are consistent (a 2.4G frequency band and a 5G frequency band are used as an example in FIG. 3, and the AP uses a channel 1 on the 2.4G frequency band to perform cascading and access, and uses a channel 36 on the 5G frequency band to perform cascading and access). As a result, airtime fairness (airtime fairness) contention exists between a plurality of APs and a plurality of STAs in a WiFi network. Consequently, performance of the WiFi network is relatively poor.

In a second method, as shown in FIG. 4, all APs use a common frequency band as a frequency band used during AP cascading, and use another frequency band as a frequency band used by the APs to access STAs. Channels used by the APs to access the STAs may be the same or different. An example in which the two frequency bands are both 5G frequency bands is used in FIG. 4, all the APs perform cascading by using a channel 100 on a first 5G frequency band, an AP 1 accesses a STA by using a channel 36 on a second 5G frequency band, an AP 2 accesses a STA by using a channel 52 on the second 5G frequency band, and an AP 3 accesses a STA by using a channel 36 on the second 5G frequency band. In the foregoing method, a plurality of APs perform cascading by using a same channel on a same frequency band. More cascading layer levels lead to poorer performance of an entire cascading path. Consequently, performance of a WiFi network covered in a distributed manner is relatively poor. Document US 2015/085699 A1 discloses adaptive network configuration. Document US 2014/254471 A1 discloses an integrated relay in wireless communication networks. US 2007/280155, US 2004/160986 A1, US 6690657 B1, US 2016/029384 A1 and US 2010/177703 A1 represent prior art which is relevant to what is disclosed herewith.

### SUMMARY

Embodiments of the present invention provide a channel selection method and an apparatus, to resolve a prior-art problem of relatively poor performance of a WiFi network covered in a distributed manner.

To achieve the foregoing objective, the following technical solutions are used in the embodiments of the present invention, wherein the present invention is defined by the appended claims.

According to a first aspect, a channel selection method according to claim 1 is provided, and is applied to a WiFi network. The WiFi network includes a first access point, a second access point, and a third access point. The first access point supports connections on at least two different frequency bands, and the at least two different frequency bands include a first frequency band and a second frequency band. The method includes, among other steps, directly cascading, by the first access point by using the first frequency band, to the second access point by using the second access point as a higher-level access point; and receiving, by the first access point, a cascading access request of the third access point, and allowing the third access point to directly cascade as a lower-level access point to the first access point by using the second frequency band. In the technical different frequency bands, the first access point may directly cascade to the second access point by using the first frequency band, and when the first access point receives the cascading access request of the third access point, allows the third access point to directly cascade to the first access point by using the second frequency band, so that cascading between access points in the WiFi network is implemented by using different frequency bands, and mutual interference between data sent by different access points is reduced, thereby improving performance of an entire cascading path and performance of the WiFi network.

With reference to the first aspect, in a first possible implementation of the first aspect, the WiFi network further includes a fourth access point, the fourth access point is a higher-level access point of the second access point, and the second access point supports connections on the at least two different frequency bands; and the fourth access point directly cascades to the second access point by using the second frequency band; or the at least two different frequency bands further include a third frequency band, and the fourth access point directly cascades to the second access point by using the third frequency band. In the possible implementation, when the WiFi network further includes the fourth access point, and the fourth access point is the higher-level access point of the second access point, the second access point may directly cascade to the fourth access point by using the second frequency band or the third frequency band in the at least two different frequency bands, so that cascading between different access points is implemented through crossover or frequency interleaving of different frequency bands, and mutual interference between data sent by different access points is reduced, thereby improving performance of an entire cascading path and performance of the WiFi network.

With reference to the first possible implementation of the first aspect, in a second possible implementation of the first aspect, if the fourth access point directly cascades to the second access point by using the second frequency band, a channel that is on the second frequency band and that is used when the fourth access point directly cascades to the second access point is different from a channel that is on the second frequency band and that is used when the first access point allows the third access point to directly cascade to the first access point. In the possible implementation, when access points in the WiFi network simultaneously use the second frequency band to perform cascading, contention between the access points using the same frequency band can be avoided by selecting different channels, thereby improving performance of the WiFi network.

With reference to any one of the first aspect to the second possible implementation of the first aspect, in a third possible implementation of the first aspect, after the directly cascading, by the first access point by using the first frequency band, to the second access point by using the second access point as a higher-level access point, the method further includes: accessing, by the first access point, a station of the first access point by using the second frequency band. In the possible implementation, the first access point accesses the station of the first access point by using the second frequency band. The operation is simple and is easy to implement, and has an effect better than that generated when the first access point accesses the station of the first access point by using the first frequency band.

With reference to any one of the first aspect to the third possible implementation of the first aspect, in a fourth possible implementation of the first aspect, an interval between the first frequency band and the second frequency band is greater than a first threshold, and the first frequency band and the second frequency band do not need to be isolated from each other by using a filter; or an interval between the first frequency band and the second frequency band is greater than a second threshold, and the first frequency band and the second frequency band need to be isolated from each other by using a filter, where the second threshold is less than the first threshold. In the possible implementation, two possibilities of the first frequency band and the second frequency band are provided, so as to provide more available ranges of the first frequency band and the second frequency band while it is ensured that the first access point supports connections on the first frequency band and the second frequency band.

According to the invention as defined in claim 1 before the directly cascading, by the first access point by using the first frequency band, to the second access point by using the second access point as a higher-level access point, the method further includes: determining, by the first access point, the second access point, where the second access point is an access point selected, based on cascading parameter information of each access point in the WiFi network, from all the access points included in the WiFi network. In the possible implementation, the first access point may determine the second access point, and an access point having optimum cascading parameter information is selected, as the second access point based on the cascading parameter information of each access point, from all the access points included in the WiFi network, so that the first access point directly cascades to the second access point having the optimum cascading parameter information, thereby ensuring relatively desirable performance of the first access point, and improving performance of the WiFi network.

With reference to any one of the aforementioned possible implementation of the first aspect, in a sixth possible implementation of the first aspect, the cascading parameter information of each access point includes at least one piece of the following information: a cascading layer level, signal strength, load information, and interference information; or the cascading parameter information of each access point includes at least one piece of the following information: a throughput, a delay, and a jitter. In the possible implementation, several pieces of possible cascading parameter information are provided, so that after the second access point is selected based on the cascading parameter information, it may be ensured that the first access point has relatively desirable performance when the first access point directly cascades to the second access point, thereby improving performance of the WiFi network.

According to a second aspect, an access point is provided according to claim 7 and is applied to a WiFi network. The WiFi network includes a first access point, a second access point, and a third access point. The access point is the first access point and supports connections on at least two different frequency bands, and the at least two different frequency bands includes a first frequency band and a second frequency band. The access point includes: a cascading unit, configured to directly cascade, by using the first frequency band, to the second access point by using the second access point as a higher-level access point; and a receiving unit, configured to: receive a cascading access request of the third access point, and allow the third access point to directly cascade as a lower-level access point to the first access point by using the second frequency band.

With reference to the second aspect, in a first possible implementation of the second aspect, the WiFi network further includes a fourth access point, the fourth access point is a higher-level access point of the second access point, and the second access point supports connections on the at least two different frequency bands; and the fourth access point directly cascades to the second access point by using the second frequency band; or the at least two different frequency bands further include a third frequency band, and the fourth access point directly cascades to the second access point by using the third frequency band.

With reference to the first possible implementation of the second aspect, in a second possible implementation of the second aspect, if the fourth access point directly cascades to the second access point by using the second frequency band, a channel that is on the second frequency band and that is used when the fourth access point directly cascades to the second access point is different from a channel that is on the second frequency band and that is used when the first access point allows the third access point to directly cascade to the first access point.

With reference to any one of the second aspect to the second possible implementation of the second aspect, in a third possible implementation of the second aspect, the access point further includes: an access unit, configured to access a station of the first access point by using the second frequency band.

With reference to any one of the second aspect to the third possible implementation of the second aspect, in a fourth possible implementation of the second aspect, an interval between the first frequency band and the second frequency band is greater than a first threshold, and the first frequency band and the second frequency band do not need to be isolated from each other by using a filter; or an interval between the first frequency band and the second frequency band is greater than a second threshold, and the first frequency band and the second frequency band need to be isolated from each other by using a filter, where the second threshold is less than the first threshold.

According to the invention as defined in claim 7 the access point further includes: a determining unit, configured to determine the second access point, where the second access point is an access point selected, based on cascading parameter information of each access point in the WiFi network, from all the access points included in the WiFi network.

With reference to any one of the aforementioned possible implementation of the second aspect, in a sixth possible implementation of the second aspect, the cascading parameter information of each access point includes at least one piece of the following information: a cascading layer level, signal strength, load information, and interference information; or the cascading parameter information of each access point includes at least one piece of the following information: a throughput, a delay, and a jitter.

According to a third aspect, an access point is provided, and the access point includes a processor and a memory. The memory stores code and data, and the processor runs the code in the memory, so that the access point performs the channel selection method provided in any one of the first aspect to the sixth possible implementation of the first aspect.

According to a fourth aspect according to claim 13 a system is provided, and the system includes a first access point, a second access point, and a third access point. The first access point is the access point provided in any one of the second aspect to the sixth possible implementation of the second aspect, or the first access point is the access point provided in the third aspect.

Another aspect of this application provides a computer readable storage medium, and the computer readable storage medium stores an instruction. When the instruction is run on a computer, the computer is enabled to perform the channel selection method provided in each of the foregoing aspects.

Another aspect of this application provides a computer program product including an instruction. When the computer program product is run on a computer, the computer is enabled to perform the channel selection method provided in each of the foregoing aspects.

It may be understood that any apparatus, computer storage medium, or computer program product provided above for the channel selection method is configured to perform the corresponding method provided above. Therefore, for advantageous effects that can be achieved by the apparatus, the computer storage medium, or the computer program product, refer to the advantageous effects in the corresponding method provided above. Details are not described herein again.

### BRIEF DESCRIPTION OF DRAWINGS

FIG. 1 is a schematic structural diagram of a WiFi network of a BSS;
FIG. 2 is a schematic structural diagram of a WiFi network covered in a distributed manner;
FIG. 3 is a schematic connection diagram of a WiFi network covered in a distributed manner;
FIG. 4 is a schematic connection diagram of another WiFi network covered in a distributed manner;
FIG. 5 is a schematic structural diagram of an access point device according to an embodiment of the present invention;
FIG. 6 is a flowchart of a channel selection method according to an embodiment of the present invention;
FIG. 7 is a schematic diagram of a channel on a 5G frequency band according to an embodiment of the present invention;
FIG. 8 is a schematic connection diagram of a WiFi network according to an embodiment of the present invention;
FIG. 9 is a schematic connection diagram of another WiFi network according to an embodiment of the present invention;
FIG. 10 is a schematic connection diagram of still another WiFi network according to an embodiment of the present invention;
FIG. 11 is a flowchart of another channel selection method according to an embodiment of the present invention;
FIG. 12 is a flowchart of still another channel selection method according to an embodiment of the present invention;
FIG. 13 is a schematic diagram of a channel on a 2.4G frequency band according to an embodiment of the present invention;
FIG. 14 is a schematic structural diagram of an access point according to an embodiment of the present invention; and
FIG. 15 is a schematic structural diagram of another access point according to an embodiment of the present invention.

### DESCRIPTION OF EMBODIMENTS

Technical terms in embodiments of the present invention are first described before the embodiments of the present invention are described.

An access point (AP) is a radio access point, or may be referred to as a wireless AP. The access point is an access point of a wireless network and a core of the wireless network. In the wireless network, main functions of the AP are shown in the following several aspects: managing a mobile station in a cell, including connecting mobile stations, authenticating a mobile station, and the like; completing a process of bridging a data frame from a wired network to a BSS; implementing address filtering and an address learning function; completing management of handover of a mobile station between different BSSs; implementing a simple network management function; and the like. In addition, the AP may be used as an extension of the wireless network, and is connected to another AP to extend coverage of the wireless network. The wireless AP is mainly used in a home with wideband and inside a building and a park, and may cover a distance of tens or hundreds of meters. An access point device may be a wireless router, and the wireless router mainly includes an integrated device for route switching and access and a pure access point device. The integrated device performs access and routing, and the pure access device is responsible only for access of a wireless client.

In the embodiments of the present invention, APs may be referred to as access points, and may be classified into a root node and a secondary node. The root node is a primary AP in a WiFi network covered in a distributed manner, and a lower-level AP of the primary AP may cascade to one or more APs. However, there is no AP cascading to a higher-level AP of the primary AP. The secondary node is a secondary AP in the WiFi network covered in a distributed manner, and the secondary AP is any AP other than the primary AP in the WiFi network covered in a distributed manner. In the embodiments of the present invention, cascading layer levels of APs included in the WiFi network covered in a distributed manner may be defined. Specifically, a cascading layer level of the primary AP may be defined as a first level, a cascading layer level of a secondary AP directly cascading to the primary AP is defined as a second level, a secondary AP directly cascading to a second level AP is defined as a third level AP, and so on.

A station (STA) may also be referred to as a mobile station, and refers to a device carrying a wireless network interface card. In the embodiments of the present invention, the station refers to a terminal device connected to an AP, that is, a wireless client accessing an AP.

FIG. 2 is a schematic structural diagram of a WiFi network according to an embodiment of the present invention. Referring to FIG. 2, an application scenario of the WiFi network is a distributed coverage scenario including a plurality of APs. To be specific, the WiFi network includes a plurality of cascaded APs, and stations STAs accessing the plurality of APs. The plurality of APs included in the WiFi network may be all connected in a WiFi manner, or some APs may be connected wiredly. An example in which the plurality of APs are all connected in a WiFi manner is used in FIG. 2 for description. The plurality of APs in FIG. 2 include R, A, B, C, and D. R is a root node, A, B, C, and D are secondary nodes, or may be referred to as lower-level access points of R. A cascading relationship between R, A, B, C, and D is shown in FIG. 2. An example in which there are 10 stations STAs (namely, S1 to S10) accessing the plurality of APs is used in FIG. 2. An access relationship between each of the stations and each of the plurality of APs is shown in FIG. 2. S1 and S2 access R, S3 and S4 access A, S5 and S6 access B, S7 and S8 access C, and S9 and S10 access D. A frequency band and a channel that are used for connecting nodes in a WiFi network, a frequency band and a channel that are used for accessing a STA, and how a to-be-accessed node selects an access point from the WiFi network are mainly described in the embodiments of the present invention.

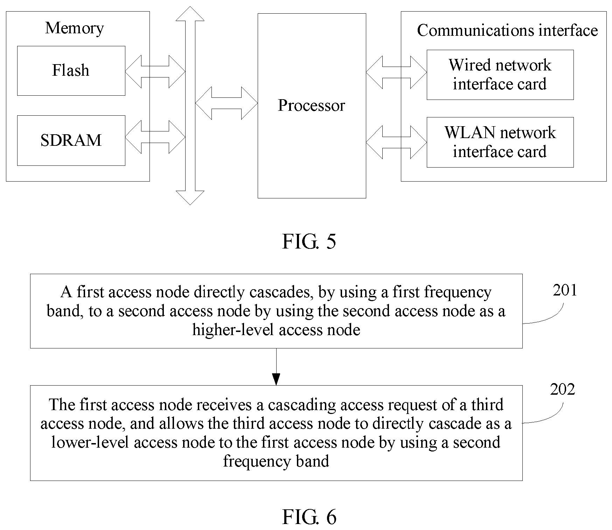

FIG. 5 is a schematic structural diagram of an access point device according to an embodiment of the present invention. Referring to FIG. 5, the access point device may include a processor, a memory, a communications interface, and a bus. The memory and the communications interface are connected to the processor by using the bus.

The processor is configured to perform various functions of the access point device, and may include one or more modules, such as a central processing unit (CPU), an application-specific integrated circuit (ASIC), and a field-programmable gate array (FPGA). The memory may be configured to store data, a software program, and a module, and may be implemented by any type of volatile or non-volatile memory or a combination thereof. An example in which the memory includes a flash and a synchronous dynamic random access memory (SDRAM) is used in FIG. 4 for description. The flash may be configured to store a program and configuration data, and the SDRAM may provide temporary storage space for program running and data processing. The communications interface is configured to support the access point device in communicating with another device. As a bridge connecting a distributed system (for example, the Ethernet) and a wireless network, the access point device needs to communicate with another node in the wireless network through a wireless interface of a WLAN, and further needs to communicate with another node in the distributed system. In FIG. 5, the communications interface of the access point device is implemented by using a wired network interface card and a WLAN network interface card, to support communication between the access point device and another node.

FIG. 6 is a flowchart of a channel selection method according to an embodiment of the present invention. The channel selection method is applied to a WiFi network, and the WiFi network includes a first access point, a second access point, and a third access point. The first access point supports connections on at least two different frequency bands, and the at least two different frequency bands include a first frequency band and a second frequency band. Referring to FIG. 6, the method includes the following several steps.

Step 201: The first access point directly cascades, by using the first frequency band, to the second access point by using the second access point as a higher-level access point.

The at least two different frequency bands may include two or more frequency bands, and frequency widths of all frequency bands in the at least two different frequency bands may be the same or different. When the at least two different frequency bands include two frequency bands, the two different frequency bands may be the first frequency band and the second frequency band. When the at least two different frequency bands include more than two frequency bands, the first frequency band and the second frequency band may be any two of the at least two different frequency bands.

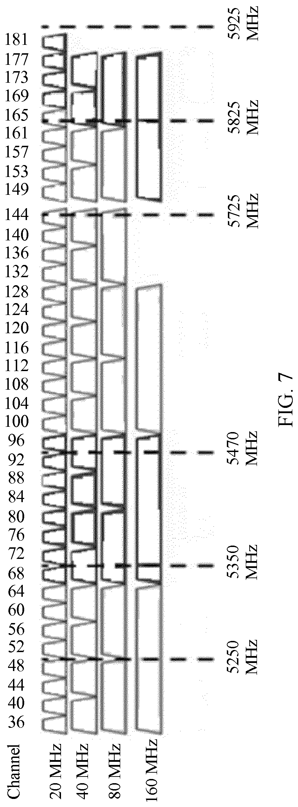

For example, the at least two different frequency bands may include a 2.4G frequency band and a 5G frequency band. Alternatively, the at least two different frequency bands may include different frequency bands on a 2.4G frequency band or a 5G frequency band, that is, the at least two different frequency bands are different frequency bands whose frequency widths are less than a frequency width of the 2.4G frequency band or a frequency width of the 5G frequency band and that are on the 2.4G frequency band or the 5G frequency band. For example, as shown in FIG. 7, the 5G frequency band is used as an example. The 5G frequency band may be divided into two different frequency bands, and the two different frequency bands may be obtained through division by using a channel 100 shown in FIG. 7. There is one frequency band on which channel numbers are less than 100 and the other frequency band on which channel numbers are greater than 100. Further, the at least two different frequency bands may further include some newly defined frequency bands and the like.

Specifically, in the WiFi network, when the at least two different frequency bands include the first frequency band and the second frequency band, if the first access point directly cascades to the second access point, and the second access point is a higher-level access point of the first access point, the first access point may directly cascade to the second access point by using the first frequency band.

Step 202: The first access point receives a cascading access request of the third access point, and allows the third access point to directly cascade as a lower-level access point to the first access point by using the second frequency band.

After the first access point directly cascades to the second access point by using the first frequency band, the first access point may receive the cascading access request of the third access point, and when the first access point receives the cascading access request of the third access point, the first access point may allow the third access point to directly cascade as the lower-level access point to the first access point by using the second frequency band.

In actual application, the third access point may traverse all channels to actively send a probe request. When the first access point receives the probe request, the first access point may return a probe response. Then the third access point sends an authentication request to the first access point, and the first access point returns an authentication response. Further, the third access point may send an association request to the first access point, and the association request may be the cascading access request in this embodiment of the present invention. After receiving the association request, the first access point may return an association response to the third access point, so that the third access point directly cascades to the first access point.

Alternatively, the first access point regularly sends a beacon frame, and the third access point may traverse all channels to obtain the beacon frame of the first access point through listening. Then authentication and association are performed between the third access point and the first access point. The cascading access request in this embodiment of the present invention may be an association request in an association process.

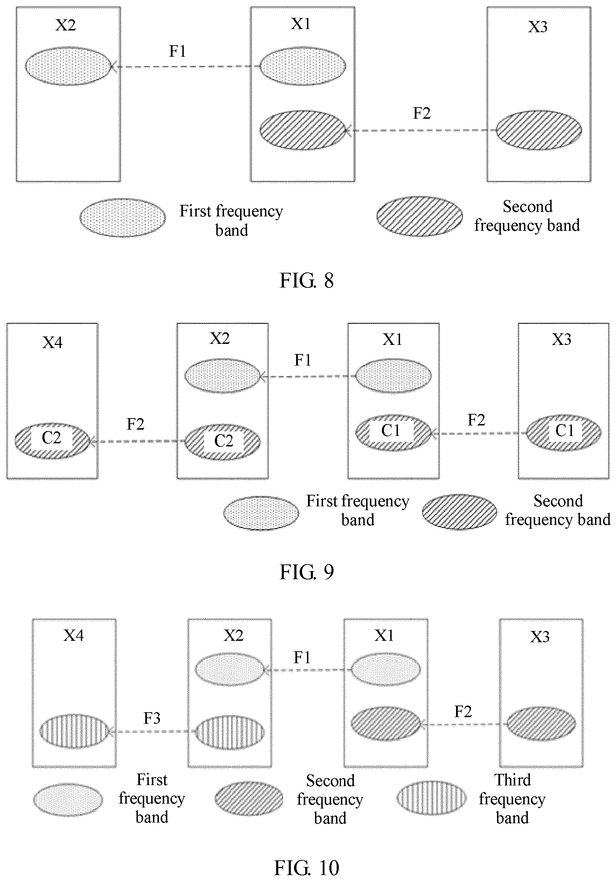

Specifically, as shown in FIG. 8, when the WiFi network includes a first access point X1, a second access point X2, and a third access point X3, if a first frequency band is F1, and a second frequency band is F2, a connection relationship between X1, X2, and X3 may be shown in FIG. 8.

In this embodiment of the present invention, when the first access point supports the connections on the at least two different frequency bands, and the at least two different frequency bands include the first frequency band and the second frequency band, the first access point may directly cascade, by using the first frequency band, to the second access point by using the second access point as a higher-level access point. In addition, when receiving the cascading access request of the third access point, the first access point allows the third access point to directly cascade as a lower-level access point to the first access point by using the second frequency band. Therefore, cascading between a higher-level access point and a lower-level access point is implemented by using different frequency bands, and mutual interference between data sent by different access points is reduced, thereby improving performance of an entire cascading path and performance of the WiFi network.

Further, the WiFi network includes a fourth access point, and the fourth access point is a higher-level access point of the second access point. When the second access point supports connections on the at least two different frequency bands, a connection relationship between the fourth access point and the second access point may include the following two cases.

Case 1: As shown in FIG. 9, the fourth access point directly cascades to the second access point by using the second frequency band. Specifically, when the second access point directly cascades as a lower-level access point of the fourth access point to the fourth access point, the second access point may directly cascade to the fourth access point by using the second frequency band in the at least two different frequency bands. An example in which the first access point is X1, the second access point is X2, the third access point is X3, the fourth access point is X4, the first frequency band is F1, and the second frequency band is F2 is used in FIG. 9 for description.

Further, each of the at least two different frequency bands may include two or more channels. When the second frequency band includes two or more channels, if the fourth access point directly cascades to the second access point by using the second frequency band, a channel that is on the second frequency band and that is used when the fourth access point directly cascades to the second access point is different from a channel that is on the second frequency band and that is used when the first access point allows the third access point to directly cascade to the first access point. In the figure, the channel that is on the second frequency band F2 and that is used when the first access point X1 allows the third access point X3 to directly cascade to the first access point X1 is represented as C1, and the channel that is on the second frequency band F2 and that is used when the fourth access point directly cascades to the second access point is represented as C2.

Case 2: As shown in FIG. 10, the at least two different frequency bands further include a third frequency band, and the fourth access point directly cascades to the second access point by using the third frequency band. Specifically, when the second access point directly cascades as a lower-level access point of the fourth access point to the fourth access point, the second access point may directly cascade to the fourth access point by using the third frequency band. The third frequency band is any frequency band other than the first frequency band and the second frequency band in the at least two different frequency bands. An example in which the first access point is X1, the second access point is X2, the third access point is X3, the fourth access point is X4, the first frequency band is F1, the second frequency band is F2, and the third frequency band is F3 is used in FIG. 10 for description.

In this embodiment of the present invention, when the WiFi network further includes the fourth access point, and the fourth access point is the higher-level access point of the second access point, the second access point may directly cascade to the fourth access point by using the second frequency band or the third frequency band in the at least two different frequency bands, so that cascading between access points is implemented through crossover or frequency interleaving of different frequency bands, and mutual interference between data sent by different access points is reduced, thereby improving performance of an entire cascading path and performance of the WiFi network.

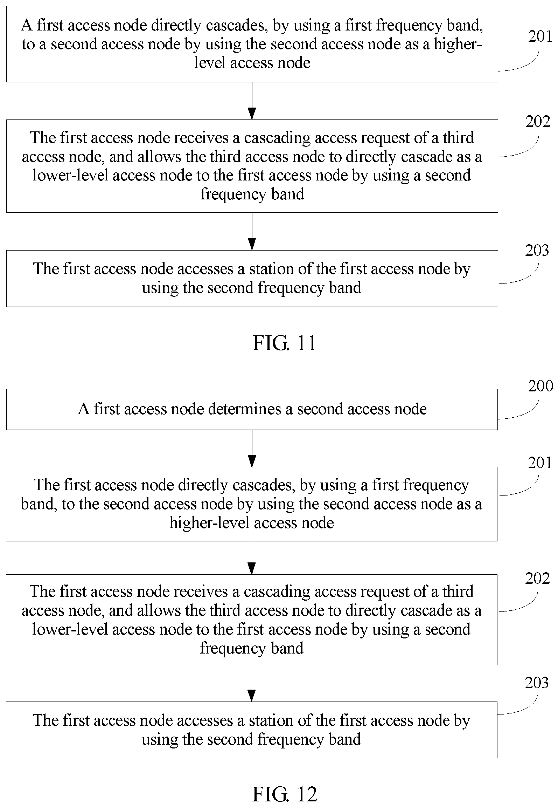

Further, referring to FIG. 11, after step 201, the method further includes step 203. An example in which step 203 is after step 202 is used in FIG. 11 for description.

Step 203: The first access point accesses a station of the first access point by using the second frequency band.

After the first access point directly cascades, by using the first frequency band, to the second access point, by using the second access point as the higher-level access point, the first access point may further access the station of the first access point by using the second frequency band. The station of the first access point refers to one or more terminal devices directly accessing the first access point. Optionally, the first access point may access the station of the first access point by using the first frequency band. In actual application, accessing the station of the first access point by the first access point by using the second frequency band is convenient to implement, and has an effect better than that generated when the first access point accesses the station of the first access point by using the first frequency band.

Further, referring to FIG. 12, before step 201, the method further includes step 200.

Step 200: The first access point determines the second access point. The second access point is an access point selected, based on cascading parameter information of each access point in the WiFi network, from all the access points included in the WiFi network.

The cascading parameter information of each access point may include one or more pieces of different information. An access point having optimum cascading parameter information may be selected, as the second access point based on the cascading parameter information of each access point, from all the access points included in the WiFi network.

Optionally, the cascading parameter information of each access point may include at least one piece of the following information: a cascading layer level, signal strength, load information, and interference information. A cascading layer level of an access point refers to a specific cascading layer at which the access point is located in the WiFi network. For example, in the WiFi network shown in FIG. 2, a cascading layer level of R may be a first level, and cascading layer levels of A and B that directly cascade to R each may be a second level. Signal strength of an access point is signal strength of the access point at a target node. For example, B in FIG. 2 scans signal strength of the other nodes in the WiFi network, to obtain signal strength of each of the other nodes at B. Load information of an access point refers to a busy degree of an air interface of the access point, and includes a time for sending a signal through the air interface and an idle time.

Alternatively, the cascading parameter information of each access point includes at least one piece of the following information: a throughput, a delay, and a jitter. The throughput, the delay, and the jitter of each access point may be obtained by using an estimation or measurement method in the prior art. For a specific estimation or measurement method, refer to a related technology. This is not specifically described in this embodiment of the present invention.

Specifically, the first access point may determine the second access point by using the following several methods that are described below.

Method 1: The first access point obtains the cascading parameter information of each access point in the WiFi network, and selects, as the second access point based on the cascading parameter information of each access point, an access point from all the access points included in the WiFi network.

That the first access point obtains the cascading parameter information of each access point in the WiFi network may include the following: The first access point sends an information obtaining request to each access point in the WiFi network, so that when receiving the information obtaining request, each access point returns the cascading parameter information of the access point to the first access point. For example, the information obtaining request may be specifically a probe request, and the cascading parameter information may be carried in a probe response. Alternatively, each access point in the WiFi network may broadcast the cascading parameter information of the access point, so that the first access point receives the cascading parameter information of each access point.

Method 2: The first access point receives cascading indication information sent by a root node in the WiFi network, and the first access point determines the second access point according to the cascading indication information. The second access point may be an access point selected by the root node, based on the cascading parameter information of each access point, from all the access points included in the WiFi network.

When the cascading parameter information of each access point includes the signal strength, the signal strength may be signal strength that is of another access point in the WiFi network and that is obtained by the first access point through scanning. After directly cascading to an access point having strongest signal strength, the first access point sends signal strength information of each access point to the root node. The root node selects an access point from all the access points as the second access point based on the signal strength and other cascading parameter information of each access point, and sends the cascading indication information to the first access point, so that the first access point determines the second access point according to the cascading indication information. Then the first access point may switch a cascading path, that is, the first access point directly cascades to the second access point.

In this embodiment of the present invention, when the first access point cascades to a higher-level access point, the first access point selects, as the higher-level access point to which the first access point directly cascades, based on the cascading parameter information of each access point, the access point having the optimum cascading parameter information from all the access points included in the WiFi network, so that the first access point directly cascades to the access point having the optimum cascading parameter information, thereby ensuring relatively desirable performance of the first access point, and improving performance of the WiFi network.

Further, in this embodiment of the present invention, the following two cases may exist for the first frequency band and the second frequency band that are in step 201 and step 202. Details are described below.

An interval between the first frequency band and the second frequency band is greater than a first threshold, and the first frequency band and the second frequency band do not need to be isolated from each other by using a filter. The first threshold may be preset. To be specific, the interval between the first frequency band and the second frequency band is relatively large, so that interference between the first frequency band and the second frequency band is relatively small. When the first access point supports connections on the first frequency band and the second frequency band, the first access point does not need to be isolated by using the filter.

Alternatively, an interval between the first frequency band and the second frequency band is greater than a second threshold, and the first frequency band and the second frequency band need to be isolated from each other by using a filter. The second threshold is less than the first threshold, and the second threshold may be preset. To be specific, the interval between the first frequency band and the second frequency band is relatively small, so that interference between the first frequency band and the second frequency band is relatively strong. When the first access point supports connections on the first frequency band and the second frequency band, to avoid the interference between the first frequency band and the second frequency band, the first access point needs to be isolated by using the filter.

In addition, in step 201, the first frequency band may include a plurality of channels, and the first access point directly cascades, by using the first frequency band, to the second access point by using the second access point as the higher-level access point. Specifically, the first access point directly cascades to the second access point by using a channel on the first frequency band.

For example, an example in which the first frequency band is a 5G frequency band is used in FIG. 7. FIG. 7 is a channel distribution diagram of the 5G frequency band. The 5G frequency band may be divided into a plurality of different channels based on different channel bandwidths. In FIG. 7, examples in which the channel bandwidths are 20 MHz, 40 MHz, 80 MHz, and 160 MHz are separately used for description. Specifically, an example in which a channel bandwidth is 20M is used. When the first access point directly cascades to the second access point by using the first frequency band, the first access point may directly cascade to the second access point by using a channel 100 whose channel bandwidth is 20M.

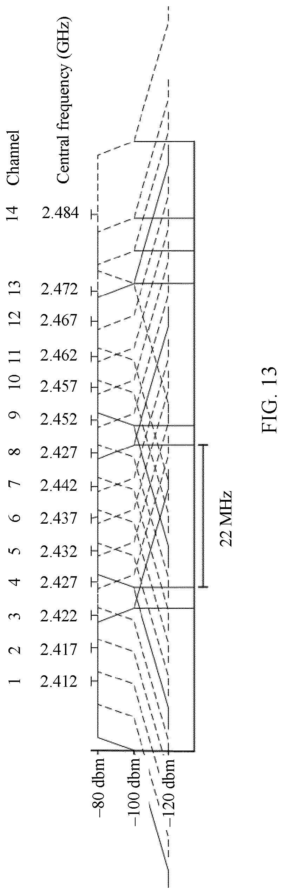

For another example, as shown in FIG. 13, an example in which the first frequency band is a 2.4G frequency band is used. FIG. 13 is a channel distribution diagram of the 2.4G frequency band. The 2.4G frequency band may include a channel 1 to a channel 14. When the first access point directly cascades to the second access point by using the first frequency band, the first access point may directly cascade to the second access point by using the channel 1.

In actual application, because a channel bandwidth of the 5G frequency band is usually higher than a channel bandwidth of the 2.4G frequency band, when the first access point supports both the 2.4G frequency band and the 5G frequency band, the first access point usually directly cascades to the second access point by using the 5G frequency band, to improve performance of the WiFi network.

In this embodiment of the present invention, the first access point supports the connections on the at least two different frequency bands, and the first access point may directly cascade to the second access point by using the first frequency band in the at least two different frequency bands, and allow the third access point to directly cascade to the first access point by using the second frequency band, so that cascading between access points in the WiFi network is implemented by using different frequency bands, and mutual interference between data sent by different access points is reduced, thereby improving performance of an entire cascading path and performance of the WiFi network.

The solutions provided in the embodiments of the present invention are mainly described above from a perspective of interaction between network elements. It may be understood that, to implement the foregoing functions, network elements such as the first access point, the second access point, and the third access point include corresponding hardware structures and/or software modules for performing various functions. A person skilled in the art should easily be aware that, in combination with the examples of the network elements and algorithms steps described in the embodiments disclosed in this specification, the present invention can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

Function modules of the access point may be obtained through division according to the method examples in the embodiments of the present invention. For example, each function module may be obtained through division based on each corresponding function, or two or more functions may be integrated into one processing module. The integrated module may be implemented in a form of hardware, or may be implemented in a form of a software function module. It should be noted that, in the embodiments of the present invention, module division is an example, and is merely a logical function division. In actual implementation, another division manner may be used.

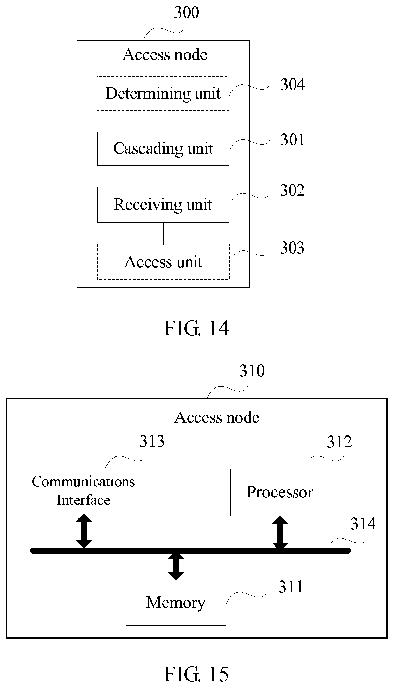

When each function module is obtained through division based on each corresponding function, FIG. 14 is a possible schematic structural diagram of an access point 300 in the foregoing embodiment. The access point 300 includes a cascading unit 301 and a receiving unit 302. The cascading unit 301 is configured to perform step 201 in FIG. 6, FIG. 11, or FIG. 12, and the receiving unit 302 is configured to perform step 202 in FIG. 6, FIG. 11, or FIG. 12. Further, the access point 300 may include an access unit 303. The access unit 303 is configured to perform step 203 in FIG. 11 or FIG. 12. The access point 300 may further include a determining unit 304. The determining unit 304 is configured to perform step 200 in FIG. 12. All related content of the steps in the method embodiments may be cited in function descriptions of corresponding function modules, and details are not described herein again.

In hardware implementation, the cascading unit 301, the access unit 303, and the determining unit 304 may be processors, the receiving unit 302 may be a receiver, and the receiver and a transmitter may constitute a communications interface.

FIG. 15 is a schematic diagram of a possible logical structure of an access point 310 in the foregoing embodiment according to an embodiment of the present invention. The access point 310 includes a processor 312, a communications interface 313, a memory 311, and a bus 314. The processor 312, the communications interface 313, and the memory 311 are connected to each other by using the bus 314. In this embodiment of the present invention, the processor 312 is configured to control and manage an action of the access point 310. For example, the processor 312 is configured to perform step 201 in FIG. 6, step 201 and step 203 in FIG. 11, or step 200, step 201, and step 203 in FIG. 12, and/or perform another process of the technology described in this specification. The communications interface 313 is configured to support the access point 310 in performing communication. The memory 311 is configured to store program code and data of the access point 310.

The processor 312 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The bus 314 may be a peripheral component interconnect (PCI) bus, an extended industry standard architecture (EISA) bus, or the like. The bus may be classified into an address bus, a data bus, a control bus, and the like. For ease of representation, only one thick line is used to represent the bus in FIG. 15, but this does not indicate that there is only one bus or only one type of bus.

In another embodiment of the present invention, a computer readable storage medium is further provided. The computer readable storage medium stores a computer executable instruction. When at least one processor of a device executes the computer executable instruction, the device performs the channel selection method provided in FIG. 6, FIG. 11, or FIG. 12.

In another embodiment of the present invention, a computer program product is further provided. The computer program product includes a computer executable instruction, and the computer executable instruction is stored in a computer readable storage medium. At least one processor of a device may read the computer executable instruction from the computer readable storage medium, and the at least one processor executes the computer executable instruction, so that the device performs the channel selection method provided in FIG. 6, FIG. 11, or FIG. 12.

In another embodiment of the present invention, a system is further provided. The system includes a first access point, a second access point, and a third access point. The first access point supports connections on at least two different frequency bands, and the first access point may be the access point shown in FIG. 14 or FIG. 15.

In the embodiments of the present invention, the first access point supports the connections on the at least two different frequency bands, and the first access point may directly cascade to the second access point by using the first frequency band in the at least two different frequency bands, and allow the third access point to directly cascade to the first access point by using the second frequency band, so that cascading between access points in the WiFi network is implemented by using different frequency bands, and mutual interference between data sent by different access points is reduced, thereby improving performance of an entire cascading path and performance of the WiFi network.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A channel selection method, applied to a WiFi network, wherein the WiFi network comprises a first access point (300), a second access point, and a third access point; the first access point (300) supports connections on at least two different frequency bands, and the at least two different frequency bands comprise a first frequency band and a second frequency band; and the method comprises:
determining (S200), by the first access point (300), the second access point, wherein the second access point is an access point selected, based on topological hierarchical connection parameter information of each access point in the WiFi network, from all the access points comprised in the WiFi network;
directly establishing a topological hierarchical connection (S201), by the first access point (300) by using the first frequency band, to the second access point by using the second access point as a higher-level access point; and
receiving (S202), by the first access point (300), an association request of the third access point, and allowing the third access point to directly establish a topological hierarchical connection as a lower-level access point to the first access point (300) by using the second frequency band.

2. The method according to claim 1, wherein the WiFi network further comprises a fourth access point, the fourth access point is a higher-level access point of the second access point, and the second access point supports connections on the at least two different frequency bands; and
the fourth access point directly establishes a topological hierarchical connection to the second access point by using the second frequency band; or the at least two different frequency bands further comprise a third frequency band, and the fourth access point directly establishes a topological hierarchical connection to the second access point by using the third frequency band.

3. The method according to claim 2, wherein if the fourth access point directly establishes a topological hierarchical connection to the second access point by using the second frequency band, a channel that is on the second frequency band and that is used when the fourth access point directly establishes a topological hierarchical connection to the second access point is different from a channel that is on the second frequency band and that is used when the first access point (300) allows the third access point to directly establishes a topological hierarchical connection to the first access point (300).

4. The method according to any one of claims 1 to 3, wherein after the directly establishing a topological hierarchical connection, by the first access point (300) by using the first frequency band, to the second access point by using the second access point as a higher-level access point, the method further comprises:
accessing, by the first access point (300), a station of the first access point (300) by using the second frequency band.

5. The method according to any one of claims 1 to 4, wherein an interval between the first frequency band and the second frequency band is greater than a first threshold, and the first frequency band and the second frequency band do not need to be isolated from each other by using a filter; or an interval between the first frequency band and the second frequency band is greater than a second threshold, and the first frequency band and the second frequency band need to be isolated from each other by using a filter, wherein the second threshold is less than the first threshold.

6. The method according to claim 1, wherein the topological hierarchical connection parameter information of each access point comprises at least one piece of the following information: a topological hierarchical connection layer level, signal strength, load information, and interference information; or the topological hierarchical connection parameter information of each access point comprises at least one piece of the following information: a throughput, a delay, and a jitter.

7. An access point (300), applied to a WiFi network, wherein the WiFi network comprises a first access point (300), a second access point, and a third access point; the access point (300) is the first access point (300) and supports connections on at least two different frequency bands, and the at least two different frequency bands comprises a first frequency band and a second frequency band; and the access point (300) comprises:
a determining unit (304), configured to determine the second access point, wherein the second access point is an access point selected, based on topological hierarchical connection parameter information of each access point in the WiFi network, from all the access points comprised in the WiFi network;
a cascading unit (301), configured to directly establish a topological hierarchical connection, by using the first frequency band, to the second access point by using the second access point as a higher-level access point; and
a receiving unit (302), configured to: receive an association request of the third access point, and allow the third access point to directly establish a topological hierarchical connection as a lower-level access point to the first access point (300) by using the second frequency band.

8. The access point (300) according to claim 7, wherein the WiFi network further comprises a fourth access point, the fourth access point is a higher-level access point of the second access point, and the second access point supports connections on the at least two different frequency bands; and
the fourth access point directly establishes a topological hierarchical connection to the second access point by using the second frequency band; or the at least two different frequency bands further comprise a third frequency band, and the fourth access point directly establishes a topological hierarchical connection to the second access point by using the third frequency band.

9. The access point (300) according to claim 8, wherein if the fourth access point directly establishes a topological hierarchical connection to the second access point by using the second frequency band, a channel that is on the second frequency band and that is used when the fourth access point directly establishes a topological hierarchical connection to the second access point is different from a channel that is on the second frequency band and that is used when the first access point (300) allows the third access point to directly establish a topological hierarchical connection to the first access point (300).

10. The access point (300) according to any one of claims 7 to 9, wherein the access point (300) further comprises:
an access unit, configured to access a station of the first access point (300) by using the second frequency band.

11. The access point (300) according to any one of claims 7 to 10, wherein an interval between the first frequency band and the second frequency band is greater than a first threshold, and the first frequency band and the second frequency band do not need to be isolated from each other by using a filter; or an interval between the first frequency band and the second frequency band is greater than a second threshold, and the first frequency band and the second frequency band need to be isolated from each other by using a filter, wherein the second threshold is less than the first threshold.

12. The access point according to claim 7, wherein the topological hierarchical connection parameter information of each access point comprises at least one piece of the following information: a topological hierarchical connection layer level, signal strength, load information, and interference information; or the topological hierarchical connection parameter information of each access point comprises at least one piece of the following information: a throughput, a delay, and a jitter.

13. A system, wherein the system comprises a first access point (300), a second access point, and a third access point, and the first access point (300) is the access point (300) according to any one of claims 7 to 12.

## Patentansprüche

1. Kanalauswahlverfahren, das auf ein WiFi-Netzwerk angewendet wird, wobei das WiFi-Netzwerk einen ersten Zugangspunkt (300), einen zweiten Zugangspunkt und einen dritten Zugangspunkt umfasst; der erste Zugangspunkt (300) Verbindungen auf mindestens zwei unterschiedlichen Frequenzbändern unterstützt und die mindestens zwei unterschiedlichen Frequenzbänder ein erstes Frequenzband und ein zweites Frequenzband umfassen; und das Verfahren Folgendes umfasst:
Bestimmen (S200), durch den ersten Zugangspunkt (300), des zweiten Zugangspunkts, wobei der zweite Zugangspunkt ein Zugangspunkt ist, der basierend auf topologischen hierarchischen Verbindungsparameterinformationen jedes Zugangspunkts in dem WiFi-Netzwerk aus allen Zugangspunkten ausgewählt ist, die in dem WiFi-Netzwerk enthalten sind;
direktes Herstellen einer topologischen hierarchischen Verbindung (S201) durch den ersten Zugangspunkt (300) unter Verwendung des ersten Frequenzbands mit dem zweiten Zugangspunkt unter Verwendung des zweiten Zugangspunkts als ein Zugangspunkt höherer Ebene; und
Empfangen (S202), durch den ersten Zugangspunkt (300), einer Assoziationsanforderung des dritten Zugangspunkts und Ermöglichen, dass der dritte Zugangspunkt direkt eine topologische hierarchische Verbindung als ein Zugangspunkt niedrigerer Ebene zu dem ersten Zugangspunkt (300) unter Verwendung des zweiten Frequenzbands herstellt.

2. Verfahren nach Anspruch 1, wobei das WiFi-Netzwerk ferner einen vierten Zugangspunkt umfasst, der vierte Zugangspunkt ein Zugangspunkt höherer Ebene des zweiten Zugangspunkts ist und der zweite Zugangspunkt Verbindungen auf den mindestens zwei unterschiedlichen Frequenzbändern unterstützt; und
der vierte Zugangspunkt unter Verwendung des zweiten Frequenzbands direkt eine topologische hierarchische Verbindung zu dem zweiten Zugangspunkt herstellt; oder die mindestens zwei verschiedenen Frequenzbänder ferner ein drittes Frequenzband umfassen, und der vierte Zugangspunkt unter Verwendung des dritten Frequenzbandes direkt eine topologische hierarchische Verbindung zu dem zweiten Zugangspunkt herstellt.

3. Verfahren nach Anspruch 2, wobei, wenn der vierte Zugangspunkt direkt eine topologische hierarchische Verbindung zu dem zweiten Zugangspunkt unter Verwendung des zweiten Frequenzbands herstellt, ein Kanal, der sich auf dem zweiten Frequenzband befindet und der verwendet wird, wenn der vierte Zugangspunkt direkt eine topologische hierarchische Verbindung zu dem zweiten Zugangspunkt herstellt, sich von einem Kanal unterscheidet, der sich auf dem zweiten Frequenzband befindet und der verwendet wird, wenn der erste Zugangspunkt (300) dem dritten Zugangspunkt ermöglicht, direkt eine topologische hierarchische Verbindung zu dem ersten Zugangspunkt (300) herzustellen.

4. Verfahren nach einem der Ansprüche 1 bis 3, wobei das Verfahren nach dem direkten Herstellen einer topologischen hierarchischen Verbindung durch den ersten Zugangspunkt (300) unter Verwendung des ersten Frequenzbands zu dem zweiten Zugangspunkt unter Verwendung des zweiten Zugangspunkts als einen Zugangspunkt höherer Ebene ferner Folgendes umfasst:
Zugreifen, durch den ersten Zugangspunkt (300), auf eine Station des ersten Zugangspunkts (300) unter Verwendung des zweiten Frequenzbands.

5. Verfahren nach einem der Ansprüche 1 bis 4, wobei ein Intervall zwischen dem ersten Frequenzband und dem zweiten Frequenzband größer als eine erste Schwelle ist und das erste Frequenzband und das zweite Frequenzband nicht durch Verwenden eines Filters voneinander isoliert werden müssen; oder ein Intervall zwischen dem ersten Frequenzband und dem zweiten Frequenzband größer als eine zweite Schwelle ist und das erste Frequenzband und das zweite Frequenzband durch Verwenden eines Filters voneinander isoliert werden müssen, wobei die zweite Schwelle kleiner als die erste Schwelle ist.

6. Verfahren nach Anspruch 1, wobei die topologischen hierarchischen Verbindungsparameterinformationen jedes Zugangspunkts mindestens ein Element der folgenden Informationen umfassen: eine topologische hierarchische Verbindungsschichtebene, Signalstärke, Lastinformationen und Interferenzinformationen; oder die topologischen hierarchischen Verbindungsparameterinformationen jedes Zugangspunkts mindestens ein Element der folgenden Informationen umfassen: einen Durchsatz, eine Verzögerung und einen Jitter.

7. Zugangspunkt (300), der auf ein WiFi-Netzwerk angewendet wird, wobei das WiFi-Netzwerk einen ersten Zugangspunkt (300), einen zweiten Zugangspunkt und einen dritten Zugangspunkt umfasst; der Zugangspunkt (300) der erste Zugangspunkt (300) ist und Verbindungen auf mindestens zwei unterschiedlichen Frequenzbändern unterstützt und die mindestens zwei unterschiedlichen Frequenzbänder ein erstes Frequenzband und ein zweites Frequenzband umfassen; und der Zugangspunkt (300) Folgendes umfasst:
eine Bestimmungseinheit (304), die dazu ausgebildet ist, den zweiten Zugangspunkt zu bestimmen, wobei der zweite Zugangspunkt ein Zugangspunkt ist, der basierend auf topologischen hierarchischen Verbindungsparameterinformationen jedes Zugangspunkts in dem WiFi-Netzwerk aus allen Zugangspunkten ausgewählt ist, die in dem WiFi-Netzwerk enthalten sind;
eine Kaskadiereinheit (301), die dazu ausgebildet ist, durch Verwenden des ersten Frequenzbands direkt eine topologische hierarchische Verbindung zu dem zweiten Zugangspunkt herzustellen, indem der zweite Zugangspunkt als ein Zugangspunkt höherer Ebene verwendet wird; und
eine Empfangseinheit (302), die für Folgendes ausgebildet ist: Empfangen einer Assoziationsanforderung des dritten Zugangspunkts und Ermöglichen, dass der dritte Zugangspunkt direkt eine topologische hierarchische Verbindung als ein Zugangspunkt niedrigerer Ebene zu dem ersten Zugangspunkt (300) unter Verwendung des zweiten Frequenzbands herstellt.

8. Zugangspunkt (300) nach Anspruch 7, wobei das WiFi-Netzwerk ferner einen vierten Zugangspunkt umfasst, der vierte Zugangspunkt ein Zugangspunkt höherer Ebene des zweiten Zugangspunkts ist und der zweite Zugangspunkt Verbindungen auf den mindestens zwei unterschiedlichen Frequenzbändern unterstützt; und
der vierte Zugangspunkt unter Verwendung des zweiten Frequenzbands direkt eine topologische hierarchische Verbindung zu dem zweiten Zugangspunkt herstellt; oder die mindestens zwei verschiedenen Frequenzbänder ferner ein drittes Frequenzband umfassen, und der vierte Zugangspunkt unter Verwendung des dritten Frequenzbandes direkt eine topologische hierarchische Verbindung zu dem zweiten Zugangspunkt herstellt.

9. Zugangspunkt (300) nach Anspruch 8, wobei, wenn der vierte Zugangspunkt direkt eine topologische hierarchische Verbindung zu dem zweiten Zugangspunkt unter Verwendung des zweiten Frequenzbands herstellt, ein Kanal, der sich auf dem zweiten Frequenzband befindet und der verwendet wird, wenn der vierte Zugangspunkt direkt eine topologische hierarchische Verbindung zu dem zweiten Zugangspunkt herstellt, sich von einem Kanal unterscheidet, der sich auf dem zweiten Frequenzband befindet und der verwendet wird, wenn der erste Zugangspunkt (300) dem dritten Zugangspunkt ermöglicht, direkt eine topologische hierarchische Verbindung zu dem ersten Zugangspunkt (300) herzustellen.

10. Zugangspunkt (300) nach einem der Ansprüche 7 bis 9, wobei der Zugangspunkt (300) ferner Folgendes umfasst:
eine Zugriffseinheit, die dazu ausgebildet ist, unter Verwendung des zweiten Frequenzbands auf eine Station des ersten Zugangspunkts (300) zuzugreifen.

11. Zugangspunkt (300) nach einem der Ansprüche 7 bis 10, wobei ein Intervall zwischen dem ersten Frequenzband und dem zweiten Frequenzband größer als eine erste Schwelle ist und das erste Frequenzband und das zweite Frequenzband nicht durch Verwenden eines Filters voneinander isoliert werden müssen; oder ein Intervall zwischen dem ersten Frequenzband und dem zweiten Frequenzband größer als eine zweite Schwelle ist und das erste Frequenzband und das zweite Frequenzband durch Verwenden eines Filters voneinander isoliert werden müssen, wobei die zweite Schwelle kleiner als die erste Schwelle ist.

12. Zugangspunkt nach Anspruch 7, wobei die topologischen hierarchischen Verbindungsparameterinformationen jedes Zugangspunkts mindestens ein Element der folgenden Informationen umfassen: eine topologische hierarchische Verbindungsschichtebene, Signalstärke, Lastinformationen und Interferenzinformationen; oder die topologischen hierarchischen Verbindungsparameterinformationen jedes Zugangspunkts mindestens ein Element der folgenden Informationen umfassen: einen Durchsatz, eine Verzögerung und einen Jitter.

13. System, wobei das System einen ersten Zugangspunkt (300), einen zweiten Zugangspunkt und einen dritten Zugangspunkt umfasst und der erste Zugangspunkt (300) der Zugangspunkt (300) nach einem der Ansprüche 7 bis 12 ist.

## Revendications

1. Procédé de sélection de canal, appliqué à un réseau WiFi, dans lequel le réseau WiFi comprend un premier point d'accès (300), un deuxième point d'accès, et un troisième point d'accès ; le premier point d'accès (300) prend en charge des connexions sur au moins deux bandes de fréquence différentes, et les au moins deux bandes de fréquence différentes comprennent une première bande de fréquence et une deuxième bande de fréquence ; et le procédé comprend :
déterminer (S200), par le premier point d'accès (300), le deuxième point d'accès, dans lequel le deuxième point d'accès est un point d'accès sélectionné, sur la base d'informations de paramètre de connexion hiérarchique topologique de chaque point d'accès dans le réseau WiFi, parmi tous les points d'accès compris dans le réseau WiFi ;
établir directement une connexion hiérarchique topologique (S201), par le premier point d'accès (300), en utilisant la première bande de fréquence, au deuxième point d'accès, en utilisant le deuxième point d'accès en tant que point d'accès de niveau plus haut ; et
recevoir (S202), par le premier point d'accès (300), une demande d'association du troisième point d'accès, et de permettre au troisième point d'accès d'établir directement une connexion hiérarchique topologique en tant que point d'accès de niveau plus bas au premier point d'accès (300), en utilisant la deuxième bande de fréquence.

2. Procédé selon la revendication 1, dans lequel le réseau WiFi comprend en outre un quatrième point d'accès, le quatrième point d'accès est un point d'accès de niveau plus haut du deuxième point d'accès, et le deuxième point d'accès prend en charge des connexions sur les au moins deux bandes de fréquence différentes ; et
le quatrième point d'accès établit directement une connexion hiérarchique topologique au deuxième point d'accès, en utilisant la deuxième bande de fréquence ; ou les au moins deux bandes de fréquence différentes comprennent en outre une troisième bande de fréquence, et le quatrième point d'accès établit directement une connexion hiérarchique topologique au deuxième point d'accès, en utilisant la troisième bande de fréquence.

3. Procédé selon la revendication 2, dans lequel, si le quatrième point d'accès établit directement une connexion hiérarchique topologique au deuxième point d'accès, en utilisant la deuxième bande de fréquence, un canal qui est sur la deuxième bande de fréquence et qui est utilisé lorsque le quatrième point d'accès établit directement une connexion hiérarchique topologique au deuxième point d'accès est différent d'un canal qui est sur la deuxième bande de fréquence et qui est utilisé lorsque le premier point d'accès (300) permet au troisième point d'accès d'établir directement une connexion hiérarchique topologique au premier point d'accès (300).

4. Procédé selon l'une quelconque des revendications 1 à 3, dans lequel, après le fait d'établir directement une connexion hiérarchique topologique, par le premier point d'accès (300), en utilisant la première bande de fréquence, au deuxième point d'accès, en utilisant le deuxième point d'accès en tant que point d'accès de niveau plus haut, le procédé comprend en outre :
accéder, par le premier point d'accès (300), à une station du premier point d'accès (300), en utilisant la deuxième bande de fréquence.

5. Procédé selon l'une quelconque des revendications 1 à 4, dans lequel un intervalle entre la première bande de fréquence et la deuxième bande de fréquence est supérieur à un premier seuil, et la première bande de fréquence et la deuxième bande de fréquence n'ont pas besoin d'être isolées l'une de l'autre, en utilisant un filtre ; ou un intervalle entre la première bande de fréquence et la deuxième bande de fréquence est supérieur à un second seuil, et la première bande de fréquence et la deuxième bande de fréquence doivent être isolées l'une de l'autre, en utilisant un filtre, dans lequel le second seuil est inférieur au premier seuil.

6. Procédé selon la revendication 1, dans lequel les informations de paramètre de connexion hiérarchique topologique de chaque point d'accès comprennent au moins un élément des informations suivantes : un niveau de couche de connexion hiérarchique topologique, une intensité de signal, des informations de charge, et des informations de brouillage ; ou les informations de paramètre de connexion hiérarchique topologique de chaque point d'accès comprennent au moins un élément des informations suivantes : un débit, un retard, et une instabilité.

7. Point d'accès (300), appliqué à un réseau WiFi, dans lequel le réseau WiFi comprend un premier point d'accès (300), un deuxième point d'accès, et un troisième point d'accès ; le point d'accès (300) est le premier point d'accès (300) et prend en charge des connexions sur au moins deux bandes de fréquence différentes, et les au moins deux bandes de fréquence différentes comprennent une première bande de fréquence et une deuxième bande de fréquence ; et le point d'accès (300) comprend :
une unité de détermination (304), configurée pour déterminer le deuxième point d'accès, dans lequel le deuxième point d'accès est un point d'accès sélectionné, sur la base d'informations de paramètre de connexion hiérarchique topologique de chaque point d'accès dans le réseau WiFi, parmi tous les points d'accès compris dans le réseau WiFi ;
une unité de mise en cascade (301), configurée pour établir directement une connexion hiérarchique topologique, en utilisant la première bande de fréquence, au deuxième point d'accès, en utilisant le deuxième point d'accès en tant que point d'accès de niveau plus haut ; et
une unité de réception (302), configurée pour : recevoir une demande d'association du troisième point d'accès, et permettre au troisième point d'accès d'établir directement une connexion hiérarchique topologique en tant que point d'accès de niveau plus bas au premier point d'accès (300), en utilisant la deuxième bande de fréquence.

8. Point d'accès (300) selon la revendication 7, dans lequel le réseau WiFi comprend en outre un quatrième point d'accès, le quatrième point d'accès est un point d'accès de niveau plus haut du deuxième point d'accès, et le deuxième point d'accès prend en charge des connexions sur les au moins deux bandes de fréquence différentes ; et
le quatrième point d'accès établit directement une connexion hiérarchique topologique au deuxième point d'accès, en utilisant la deuxième bande de fréquence ; ou les au moins deux bandes de fréquence différentes comprennent en outre une troisième bande de fréquence, et le quatrième point d'accès établit directement une connexion hiérarchique topologique au deuxième point d'accès, en utilisant la troisième bande de fréquence.

9. Point d'accès (300) selon la revendication 8, dans lequel, si le quatrième point d'accès établit directement une connexion hiérarchique topologique au deuxième point d'accès, en utilisant la deuxième bande de fréquence, un canal qui est sur la deuxième bande de fréquence et qui est utilisé lorsque le quatrième point d'accès établit directement une connexion hiérarchique topologique au deuxième point d'accès est différent d'un canal qui est sur la deuxième bande de fréquence et qui est utilisé lorsque le premier point d'accès (300) permet au troisième point d'accès d'établir directement une connexion hiérarchique topologique au premier point d'accès (300).

10. Point d'accès (300) selon l'une quelconque des revendications 7 à 9, dans lequel le point d'accès (300) comprend en outre :
une unité d'accès, configurée pour accéder à une station du premier point d'accès (300) en utilisant la deuxième bande de fréquence.

11. Point d'accès (300) selon l'une quelconque des revendications 7 à 10, dans lequel un intervalle entre la première bande de fréquence et la deuxième bande de fréquence est supérieur à un premier seuil, et la première bande de fréquence et la deuxième bande de fréquence n'ont pas besoin d'être isolées l'une de l'autre, en utilisant un filtre ; ou un intervalle entre la première bande de fréquence et la deuxième bande de fréquence est supérieur à un second seuil, et la première bande de fréquence et la deuxième bande de fréquence doivent être isolées l'une de l'autre, en utilisant un filtre, dans lequel le second seuil est inférieur au premier seuil.

12. Point d'accès selon la revendication 7, dans lequel les informations de paramètre de connexion hiérarchique topologique de chaque point d'accès comprennent au moins un élément des informations suivantes : un niveau de couche de connexion hiérarchique topologique, une intensité de signal, des informations de charge, et des informations de brouillage ; ou les informations de paramètre de connexion hiérarchique topologique de chaque point d'accès comprennent au moins un élément des informations suivantes : un débit, un retard, et une instabilité.

13. Système, dans lequel le système comprend un premier point d'accès (300), un deuxième point d'accès, et un troisième point d'accès, et le premier point d'accès (300) est le point d'accès (300) selon l'une quelconque des revendications 7 à 12.
